# EUROPEAN PATENT APPLICATION

(11) **EP 1 674 428 A1**
(43) Date of publication of application: **28.06.2006**
(21) Application number: 04771682.4
(22) Date of filing: 09.08.2004
(51) Int. Cl.: C02F 1/46, C02F 1/50

(54) **METHOD FOR PRODUCING WATER CONTAINING METAL ION AND WATER TREATMENT METHOD USING SAID PRODUCTION METHOD, AND TOOL FOR PRODUCING WATER CONTAINING METAL ION AND WATER TREATMENT DEVICE USING SAID PRODUCTION TOOL**

(30) Priority: 22.08.2003 JP 2003298218; 29.10.2003 JP 2003368416; 30.01.2004 JP 2004022549; 31.05.2004 JP 2004160513
(71) Applicant: Kido, Toshihiro, Fukuoka-shi, Fukuoka 811-1362 (JP); SUGIMOTO, Mikio, Yamaguchi 759-0207 (JP); Sugimoto, Kazutaka, Ube-shi, Yamaguchi 759-0207 (JP); Sugimoto, Keiko, Ube-shi, Yamaguchi 759-0207 (JP)
(72) Inventor: SUGIMOTO, Mikio, Ube-shi, Yamaguchi 759-0207 (JP)
(74) Representative: Jones, Helen M.M.
(86) International application number: PCT/JP2004/011721
(87) International publication number: WO 2005/019116

(57) **Abstract**

To present a manufacturing method of metal ion water, a water treatment method, a manufacturing device of metal ion water, or a water treatment apparatus capable of treating water for various purposes efficiently at low cost, other metal (silver (Ag)) 2 is plated on one side of one metal (copper (Cu)) 1 of two dissimilar metals 1, 2 mutually different in ionization tendency (potential) so that having water treatment apparatus, both metals 1, 2 adhered mutually are submerged in water to be treated, in which metal (copper) ions are eluted from the metal (copper (Cu)) of higher ionization tendency and/or lower electrode potential by corrosive action of oxidation-reduction reaction by local cell formation of the metal (copper (Cu)) of higher ionization tendency and/or lower electrode potential for moving electrons from the metal (copper (Cu)) of lower electrode potential to the metal (silver (Ag) of higher potential, in order to prevent corrosion of the metal (silver (Ag)) of lower ionization tendency and/or higher electrode potential of the two dissimilar metals, and specified water treatment (sterilizing, algicidal treatment) is executed by the metal (copper) ions.

## Description

### TECHNICAL FIELD

The present invention relates to a manufacturing method of metal ion water, a water treatment method used in manufacture of all kinds of water contained in vase, flower pot, water tank, pond, lake, swimming pool, cooling column, cooling tower, bath, low tank of toilet, humidifier, circulating water duct, and others including cleaning water used in sterilizing and cleaning treatment of clinical and medical care appliances; also, a manufacturing device of metal ion water and a water treatment apparatus used in manufacture of cleaning water and drinking water used in submerged state in vase or flower pot containing water, water tank, pond, lake, swimming pool, cooling column, cooling tower, bathtub in bath, low tank of toilet, humidifier, circulating water duct, and others including screen at water intake, and sterilizing and cleaning treatment of clinical and medical care appliances.

### BACKGROUND ART

Water treatment includes various purposes as listed below, and countermeasures have been taken conventionally.
1. Water treatment for life extension of cut flowers
   Hitherto, in this kind of water treatment, for example, it is proposed to use a life extending agent composed of at least one colloid protective agent selected from surface active agent and deflocculant, and metal silver colloid (Japanese Patent Application Laid-Open No. 11-158003) ... related art 1.
2. Water treatment for prevention of water bloom occurring in stagnant water such as pond, lake, or swimming pool in closed season
   Hitherto, in this kind of water treatment, for example, it is proposed to prevent formation of water bloom by generating a ferromagnetic field in water (Japanese Patent Application Laid-Open No. 2001-137860) ... related art 2.
3. Water treatment for sterilization of Legionella and other bacteria in swimming pool or bathroom
   Hitherto, in this kind of water treatment, for example, it is proposed to sterilize by using chlorine agent, ozone gas, or ultraviolet rays (Japanese Patent Application Laid-Open No. 2002-86168) ... related art 3, or to sterilize electrolytically by applying direct-current voltage to electrodes in diaphragm-free electrolytic bath (Japanese Patent Application Laid-Open No. 2002-219463) ... related art 4.
4. Water treatment for prevention of algae sticking to walls transparent water tank, etc.
   Hitherto, in this kind of water treatment, for example , it is proposed to use photocatalyst reactor or ion exchange apparatus (Japanese Patent Application Laid-Open No. 2003-23917) ... related art 5.
5. Water treatment for aggregation and sedimentation of impurities in turbid water
   Hitherto, in this kind of water treatment, for example, it is proposed to aggregate and sediment floating fine particles by applying voltage by inserting a plurality of electrodes in turbid water (Japanese Patent Application Laid-Open No. 2002-282861) ... related art 6.

In these related arts, the following problems have been known.
1. Water treatment for life extension of cut flowers
   In the method of related art 1 using the life extending agent composed of surface active agent and deflocculant, the life extending agent must be injected every time water is changed, and it is costly.
2. Water treatment for prevention of water bloom occurring in stagnant water such as pond, lake, or swimming pool in closed season
   In the method of related art 2 of generating a ferromagnetic field in water, the apparatus for generating ferromagnetic field is expensive.
3. Water treatment for sterilization of Legionella and other bacteria in swimming pool or bathroom
   In the method of related art 3 of sterilizing by using chlorine agent, ozone gas, or ultraviolet rays, the ozone gas generating apparatus is expensive, power source is required for operating the apparatus, and a huge quantity of chlorine agent is spent. Thus, the running cost is high.
   In the method of related art 4 of sterilizing electrolytically by applying direct-current voltage to electrodes in diaphragm-free electrolytic bath, the apparatus is expensive, power source is required for operating the apparatus. Thus, the running cost is high.
4. Water treatment for prevention of algae sticking to walls transparent water tank, etc.
   In the method of related art 5 of using photocatalyst reactor or ion exchange apparatus, the cost is high.
5. Water treatment for aggregation and sedimentation of impurities in turbid water
   In the method of related art 6 of applying voltage by inserting a plurality of electrodes in turbid water, power source is required, and the running cost is high.

The present invention is devised to solve the problems of the related arts, and it is hence an object thereof to present manufacturing method of metal ion water, water treatment method using the manufacturing method, manufacturing device of metal ion water, and water treatment apparatus using the manufacturing device, so as to treat water conforming to these purposes efficiently and at low cost.

### DISCLOSURE OF THE INVENTION

1. To achieve the object, a manufacturing method of metal ion water is characterized by submerging two dissimilar metals mutually different in ionization tendency (potential) in water to be treated in mutually contacting state, in which metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals, and therefore metal ion water can be manufactured in short time, efficiently, and perpetually.
   In this manufacturing method of metal ion water, by an extremely simple structure of mutually adhering dissimilar metals, running cost is low, and metal ion water of high concentration can be manufactured at low cost.
2. A water treatment method is characterized by submerging two dissimilar metals mutually different in ionization tendency (potential) in water to be treated in mutually contacting state, in which metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals, and therefore metal ions treat water efficiently as specified by the own specific function.
   In this water treatment method, by an extremely simple structure of mutually adhering dissimilar metals, the running cost is low, and specified water treatment can be done efficiently at low cost.
3. A manufacturing method of metal ion water and a water treatment method relates to the manufacturing method of metal ion water of a first aspect and the water treatment method of a second aspect, in which the dissolved oxygen in the water to be treated is increased, and the corrosive action of oxidation-reduction reaction by local cell formation of the metal of higher ionization tendency and/or lower electrode potential is accelerated so that elution of metal ions can be accelerated.
4. A manufacturing device of metal ion water is a manufacturing device of metal ion water used in submerged state in water to be treated, having two dissimilar metals mutually different in ionization tendency (potential) in mutually contacting state, in which metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals, and therefore metal ion water can be manufactured in short time, efficiently, and perpetually.
   In this manufacturing device of metal ion water, by an extremely simple structure of mutually adhering dissimilar metals, the running cost is low, and metal ion water of high concentration can be manufactured at low cost.
5. A water treatment apparatus is a water treatment apparatus used in submerged state in water to be treated, having two dissimilar metals mutually different in ionization tendency (potential) in mutually contacting state, in which metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals, and therefore metal ions treat water efficiently as specified by the own specific function, and specified water treatment is done efficiently by the specified function of metal ions eluted in water.
   In this water treatment apparatus , by an extremely simple structure of mutually adhering dissimilar metals, the running cost is low, and specified water treatment can be done efficiently at low cost.
6. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of a first to fifth aspects, in which other metal is plated on either one metal of the two dissimilar metals, and both contact with each other, and the contact state is achieved easily and securely, and hence both manufacturing efficiency and handling convenience is excellent.
   Since the total surfaces of two dissimilar metals contact securely with each other, if the metals decrease due to elution of metal ions from the metal of higher ionization tendency and/or lower electrode potential, both metals are not separated from each other, and metal ions are eluted perpetually until the metal of higher ionization tendency and/or lower electrode potential is lost completely.
7. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of a sixth aspect, in which the metal of lower ionization tendency and/or higher electrode potential is plated on the metal of higher ionization tendency and/or lower electrode potential. Consequently, both metals are adhered tightly to each other, and it is, therefore, the metal of higher ionization tendency and/or lower electrode potential that is decreased by elution of metal ions, and the basic material cost can be reduced substantially if the metal to be plated is the metal of lower ionization tendency and/or higher electrode potential is an expensive metal such as silver.
8. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to fifth aspects, in which other metal is adhered to either one metal of the two dissimilar metals by cladding method, and therefore adherence state can be achieved easily and securely.
   Since the total surfaces of two dissimilar metals contact securely with each other, if the metals decrease due to elution of metal ions from the metal of higher ionization tendency and/or lower electrode potential, both metals are not separated from each other, and metal ions are eluted perpetually until the metal of higher ionization tendency and/or lower electrode potential is lost completely.
9. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the sixth to eighth aspects, in which by exposing other metal by removing multiple cutting positions by scribing or grooving either one metal adhered by plating or cladding method, many contact boundary portions of two dissimilar metals are formed, and the elution amount of metal ions can be increased. That is, since the elution amount of metal ions is large in the aggressive portion of corrosive action of oxidation-reduction reaction by local cell formation by the strongest move of electrons in the boundary portion of dissimilar metals, the elution amount of metal ions per unit area can be increased.
10. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the fourth to eighth aspects, in which by cutting or blanking multiple holes penetrating through two dissimilar metals, multiple contact boundary portions of two dissimilar metals are formed in the inner side of the multiple holes, and multiple contact boundary portions of two dissimilar metals are formed, so that the elution amount of metal ions per unit area can be increased.
11. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the sixth to eighth aspects , in which by processing nearly in rhombic mesh form by cutting zigzag sections and expanding in plate material composed of two dissimilar metals, the elution amount of metal ions per unit area can be increased without waste of material.
   Further, by expanding the metals, the metals become brittle and likely to corrode, and hence the elution amount of metal ions can be further increased.
   Moreover, since multiple contact boundary portions are formed in the cut sections, water permeability is assured, and it is particularly powerful in the flowing portions.
12. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the sixth to eighth aspects, in which by forming like metal wires by cutting in a direction nearly orthogonal to the contact surfaces of two dissimilar metals, contact boundary portions of two dissimilar metals are formed at cut sections at both sides in a longitudinal direction, so that the elution amount of metal ions per unit area can be increased.
   Further, by forming like metal wires, they can be used as wires for bundling bouquet of flowers demanding water treatment. Or by winding around an arbitrary object in the water to be treated, the object can be stabilized at specified position in water without using any specific fixing means.
13. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the sixth to eighth aspects, in which either one of the two dissimilar metals is formed like a string, and other metal is plated in part of the surface of the string metal, and therefore the elution amount of metal ions per unit area can be increased.
   Further, by forming like strings, they can be knitted as cord or rope, or woven into cloth, or multiple strings can be woven or formed into nonwoven cloth, so that the applications can be expanded widely.
14. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to fifth aspects, in which the two dissimilar metals are formed linearly, and the both linear dissimilar metals are woven or knitted in mutually adhering state. Therefore, it is easy to manufacture, and the manufacturing cost is reduced, and the application can be expanded.
15. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to fifth aspects, in which the two dissimilar metals are formed linearly, and either one metal of the two linear dissimilar metals is wound on the other metal to be adhered to each other. Therefore, it is easy to manufacture, and the manufacturing cost is reduced, and the application can be expanded.
16. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of a fourteenth or fifteenth aspect, in which either one metal of the two dissimilar metals formed linearly is plated on the outer side of a core member made of other material, and the core member is made of inexpensive metal or resin other than metal. Therefore, the material cost is saved, and the strength and flexibility of wire material can be set freely.
17. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to fifth aspects, in which either one metal of the two dissimilar metals having lower ionization tendency and/or higher electrode potential is composed of powder, particles, wire or fiber containing carbon such as carbon or graphite, and since it is massively cast into other metal of higher ionization tendency and/or lower electrode potential in coexisting state, the two dissimilar metals are adhered to each other, and by cutting or blanking multiple holes penetrating through two dissimilar metals, multiple contact boundary portions of two dissimilar metals are formed at the inner side of multiple holes, so that the elution amount per unit area can be increased.
18. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to fifth aspects, in which either one metal of the two dissimilar metals having lower ionization tendency and/or higher electrode potential is composed of powder, particles, wire or fiber containing carbon such as carbon or graphite, and since it is massively cast into other metal of higher ionization tendency and/or lower electrode potential in coexisting state, the two dissimilar metals are adhered to each other, and by processing nearly in rhombic mesh form by cutting zigzag sections and expanding in plate material composed of two dissimilar metals, multiple contact boundary portions of two dissimilar metals are formed in the cut sections. Therefore, the elution amount of metal ions per unit area can be increased without waste of material.
   Further, by expanding the metals, the metals become brittle and likely to corrode, and hence the elution amount of metal ions can be further increased.
   Moreover, since multiple contact boundary portions are formed in the cut sections, water permeability is assured, and it is particularly powerful in the flowing portions.
19. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects , in which either one metal of the two dissimilar metals having higher ionization tendency and/or lower electrode potential is formed of copper, and copper ions are eluted perpetually and efficiently into the water to be treated, and bactericidal and algicidal effect by copper ions are obtained.
   Therefore, when the invention is applied in water contained in vase or flower pot, growth of bacteria in water in vase or flower pot is prevented, rotting of stems of cut flowers submerged in water can be suppressed, and it is effective to delay earlier seasoning of cut flowers due to impaired pumping of water by clogging of ducts of flowers with bacteria and other impurities. As a result, cut flowers can be maintained in fresh state for a longer period, and the life can be extended.
   When the invention is applied in water contained in bathtub or swimming pool, generation of Legionella and other bacteria can be prevented, and when applied in water reservoir such as circulating water duct, low tank of toilet, or tank of humidifier, growth of germs can be prevented. Further, when applied in ultrasonic humidifier for injecting water in atomized state, fog containing copper ions can be sprinkled over wide range, and bacteria and pathogens can be destroyed in any place including livestock farm, agricultural fields, forests, general household, factories, and others.
   By applying the invention in water tank, generation of algae sticking to walls of transparent water tank can be prevented, and by applying in cooling column or cooling tower, periodic cleaning of deposits of algae can be avoided.
   When the invention is applied in stagnant water in pond, lake or swimming pool in closed season, generation of water bloom can be prevented by algicidal action.
20. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects, in which because either one metal of the two dissimilar metals having higher ionization tendency and/or lower electrode potential is formed of silver, silver ions are eluted perpetually and efficiently into the water to be treated, and bactericidal action by silver ions are obtained.
21. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects, in which because either one metal of the two dissimilar metals having higher ionization tendency and/or lower electrode potential is formed of tin, tin ions are eluted perpetually and efficiently into the water to be treated, and preservative action and cleaning action by tin ions are obtained.
   Therefore, when the invention is applied in water contained in vase or flower pot, rotting of water contained in vase or flower pot is much retarded, and rotting of stems of cut flowers submerged in water can be suppressed, and it is effective to delay earlier seasoning of cut flowers due to impaired pumping of water by clogging of ducts of flowers with bacteria and other impurities. As a result, cut flowers can be maintained in fresh state for a longer period, and the life can be extended.
   When applied in water tank, water can be maintained in clean state for a long period.
22. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects, in which because either one metal of the two dissimilar metals having higher ionization tendency and/or lower electrode potential is formed of aluminum, aluminum ions are eluted perpetually and efficiently into the water to be treated, and by aggregating and settling actions of aluminum ions, impurities are aggregated and make the water clear.
   Therefore, when the invention is combined, for example, with the invention of the nineteenth aspect, water bloom destroyed by copper ions can be aggregated by aluminum ions, and settle in the bottom.
23. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects, in which because either one metal of the two dissimilar metals having higher ionization tendency and/or lower electrode potential is formed of magnesium, magnesium ions are eluted perpetually and efficiently into the water to be treated.
   Therefore, when the invention is applied in tap water used for various purposes, magnesium ions are bonded with chlorine of hypochlorite contained in tap water, and change into magnesium chloride, and damage by chlorine can be eliminated.
   Further, when applied in tap water, well water, natural water, and every kind of water, water of low oxidation-reduction potential (alkaline reduced ion water) can be manufactured easily at low cost.
   Moreover, since hydrogen is generated from magnesium, hydrogen water can be manufactured easily at low cost.
   Still more, innumerable fine hydrogen foams are generated from magnesium, and dust particles and impurities contained in water can be elevated to the water surface together with these innumerable fine foams so that they can be removed easily.
24. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects, in which because either one metal of the two dissimilar metals having higher ionization tendency and/or lower electrode potential is formed of iron, iron ions are eluted perpetually and efficiently into the water to be treated.
   Therefore, when the invention is applied in river, lake, seawater or the like, aquatic animals and plants are activated by eluted iron ions, and iron ions are bonded with phosphor in water to form iron phosphate, and damage by phosphor contained in water can be eliminated.
25. A manufacturing method of metal ion water, a water treatment method, a manufacturing device of metal ion water or a water treatment apparatus relates to the manufacturing method of metal ion water, water treatment method, manufacturing device of metal ion water or water treatment apparatus of any one of the first to eighteenth aspects, in which because either one metal of the two dissimilar metals having higher ionization tendency and/or lower electrode potential is formed of zinc, zinc ions are eluted perpetually and efficiently into the water to be treated.

Therefore, when the invention is applied in drinking water, zinc of which uptake is warned to be low presently can be taken easily. Still more, when the invention is applied in water suction and discharge piping of cooling system such as cooling tower or plastic forming machine, dust components such as fur or calcium in piping can be removed at low cost.

### BRIEF DESCRIPTION OF THE DRAWINGS

FIG. 1 is a plan view of manufacturing device of metal ion water or water treatment apparatus in embodiment 1 of the invention.
FIG. 2 is a magnified sectional view along line II-II in FIG. 1.
FIG. 3 is a plan view of manufacturing device of metal ion water or water treatment apparatus in embodiment 8 of the invention.
FIG. 4 is a magnified sectional view along line IV-IV in FIG. 3.
FIG. 5 is a plan view of manufacturing device of metal ion water or water treatment apparatus in embodiment 9 of the invention.
FIG. 6 is a magnified sectional view along line VI-VI in FIG. 5.
FIG. 7 is a magnified sectional view along line VI-VI in FIG. 5 showing manufacturing device of metal ion water or water treatment apparatus in embodiment 10 of the invention.
FIG. 8 is a plan view of manufacturing device of metal ion water or water treatment apparatus in embodiment 11 of the invention.
FIG. 9 is a magnified sectional view along line IX-IX in FIG. 8.
FIG. 10 is a plan view of manufacturing device of metal ion water or water treatment apparatus in embodiment 12 of the invention.
FIG. 11 is a magnified sectional view along line XI-XI in FIG. 10.
FIG. 12 is a plan view of manufacturing device of metal ion water or water treatment apparatus in embodiment 16 of the invention.
FIG. 13 is a magnified sectional view along line XIII-XIII in FIG. 12.
FIG. 14 is a magnified end view along line XIII-XIII in FIG. 12 showing manufacturing device of metal ion water or water treatment apparatus in embodiment 17 of the invention.
FIG. 15 is a magnified plan view of manufacturing device of metal ion water or water treatment apparatus in embodiment 18 of the invention.
FIG. 16 is a magnified sectional view along line XVI-XVI in FIG. 15.

### BEST MODE FOR CARRYING OUT THE INVENTION

Preferred embodiments of the invention are specifically described below.

### (Embodiment 1)

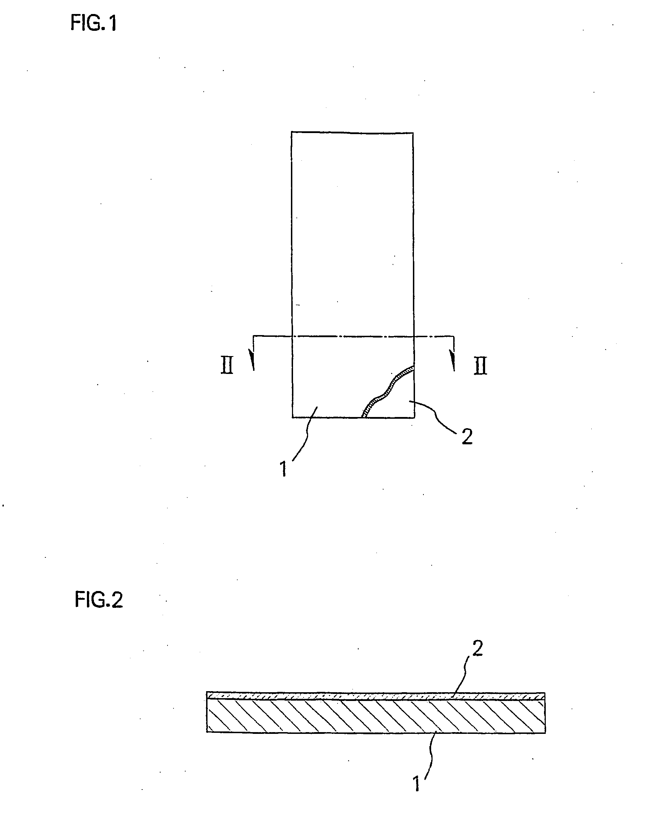

Manufacturing device of metal ion water and water treatment apparatus in embodiment 1 are described in FIG. 1 (plan view) and FIG. 2 (magnified sectional view along line II-II in FIG. 1), in which by plating other metal 2 on part of either one metal 1 of two dissimilar metals 1, 2 mutually different in ionization tendency (potential), the two metals are adhered to each other.

More specifically, in the manufacturing device of metal ion water or water treatment apparatus in embodiment 1, as two dissimilar metals 1, 2 mutually different in ionization tendency (potential), by plating silver (Ag) as metal 2 of lower ionization tendency and/or higher electrode potential on one side of plate of copper (Cu) as metal 1 of higher ionization tendency and/or lower electrode potential, copper and silver are adhered to each other.
The manufacturing device of metal ion water or water treatment apparatus in embodiment 1 is thus composed, and when this manufacturing device of metal ion water or water treatment apparatus is merely submerged in water to be treated, copper (Cu) alone may be oxidized and corroded in water to elute metal ions, but in the case of copper (Cu) alone, since oxide film is formed, elution of metal ions is stopped. In embodiment 1, on the other hand, copper ions are perpetually and efficiently eluted from copper (Cu) as the metal 1 of higher ionization tendency and/or lower electrode potential without forming oxide film by corrosive action of oxidation-reduction reaction by local cell formation of copper (Cu) as the metal 1 of higher ionization tendency and/or lower electrode potential for moving electrons from the metal of lower electrode potential to the metal of higher potential, in order to prevent corrosion of silver (Ag) as the metal 2 of lower ionization tendency and/or higher electrode potential of the two dissimilar metals 1, 2, and therefore bactericidal and algicidal effects are obtained perpetually until the copper is spent completely by the bactericidal action and algicidal action of copper ions eluted in water.

When the invention is applied in water contained in vase or flower pot, growth of germs in water in the vase or flower pot can be prevented, and rotting of stems of cut flowers submerged in water is suppressed, and it is effective to delay earlier seasoning of cut flowers due to impaired pumping of water by clogging of ducts of flowers with bacteria and other impurities. As a result, cut flowers can be maintained in fresh state for a longer period, and the life can be extended. When the invention is applied in water contained in bathtub or swimming pool, growth of Legionella and other bacteria can be prevented, and when applied in circulating water duct, low tank of toilet, or the like, growth of germs can be prevented.

Further, when applied in ultrasonic humidifier for injecting water in atomized state, or metal ion water is sprayed by spraying machine, fog containing copper ions can be sprinkled over wide range, and bacteria and pathogens can be destroyed in any place including livestock farm, agricultural fields, forests, general household, factories, and others.

By applying the invention in water tank, generation of algae sticking to walls of transparent water tank can be prevented, and by applying in cooling column or cooling tower, periodic cleaning of deposits of algae can be avoided.

When the invention is applied in stagnant water in pond, lake or swimming pool in closed season, generation of water bloom can be prevented by algicidal action.

Recently, due to massive growth of jellyfish, hard labor is required for disposal of jellyfish caught in fishing net, and in an experiment of putting jellyfish into water or seawater containing eluted copper ions in embodiment 1, jellyfish destroying effect has been confirmed.

Hence, the application of the invention in embodiment 1 includes:
(1) Method of preventing jellyfish from approaching within specified range, or destroying jellyfish, by eluting copper ions in sea, or putting water or seawater.containing eluted copper ions into the sea.
(2) Method of destroying jellyfish by sprinkling water or seawater containing eluted copper ions over collected jellyfish, or putting collected jellyfish into water or seawater containing eluted copper ions.

In the method of (2), rotting of dead bodies of jellyfish can be prevented by bactericidal action of copper ions.

Thus, various problems due to massive growth of jellyfish can be solved at once.

Thus, in this manufacturing device or metal ion water or water treatment apparatus, by an extremely simple structure of mutually adhering dissimilar metals 1, 2, the running cost is low, and specified water treatment (bactericidal and algicidal treatment) can be done efficiently at low cost.

Further, two dissimilar metals 1, 2 are adhered to each other by plating other metal on either one metal, contact state is achieved easily and securely, and it is excellent in both manufacturing performance and handling convenience.

By plating silver on copper, consumption of expensive silver is saved, and the cost is lowered in total.

In such water treatment, by increasing dissolved oxygen in water to be treated, corrosive action of oxidation-reduction reaction by local cell formation of copper as the metal of higher ionization tendency and/or lower electrode potential can be accelerated, and elution of copper ions is accelerated so that metal ion water of high concentration can be manufactured efficiently in short period.

Other embodiments of the invention are described below. In explanation of other embodiments, same parts as in embodiment 1 are not shown in the drawing, and only different points are described.

### (Embodiment 2)

In manufacturing device of metal ion water or water treatment apparatus in embodiment 2, of the two dissimilar metals 1, 2, one metal of higher ionization tendency and/or lower electrode potential is silver (Ag), and other metal of lower ionization tendency and/or higher electrode potential than silver (Ag) is gold (Au), and by plating other metal on one metal, silver and gold are adhered to each other.

The manufacturing device of metal ion water or water treatment apparatus in embodiment 2 is thus composed, and when this manufacturing device of metal ion water or water treatment apparatus is merely submerged in water to treated, silver ions are perpetually and efficiently eluted from silver (Ag) as the metal of higher ionization tendency and/or lower electrode potential by corrosive action of oxidation-reduction reaction by local cell formation of silver (Ag) as the metal of higher ionization tendency and/or lower electrode potential for moving electrons from the metal of lower electrode potential to the metal of higher potential, in order to prevent corrosion of gold (Au) as the metal of lower ionization tendency and/or higher electrode potential of the two dissimilar metals 1, 2, and therefore bactericidal effect is obtained by the bactericidal action of silver ions eluted in water.

### (Embodiment 3)

In manufacturing device of metal ion water or water treatment apparatus in embodiment 3, of the two dissimilar metals 1, 2, one metal of higher ionization tendency and/or lower electrode potential is tin (Sn), and other metal of lower ionization tendency and/or higher electrode potential than tin (Sn) is copper (Cu) or silver (Ag), and by plating other metal on one metal, tin and copper or silver are adhered to each other. The manufacturing device of metal ion water or water treatment apparatus in embodiment 3 is thus composed, and when this manufacturing device of metal ion water or water treatment apparatus is merely submerged in water to be treated, tin ions are perpetually and efficiently eluted from tin (Sn) as the metal of higher ionization tendency and/or lower electrode potential by corrosive action of oxidation-reduction reaction by local cell formation of tin (Sn) as the metal of higher ionization tendency and/or lower electrode potential for moving electrons from the metal of lower electrode potential to the metal of higher potential, in order to prevent corrosion of copper (Cu) or silver (Ag) as the metal of lower ionization tendency and/or higher electrode potential of the two dissimilar metals 1, 2, and therefore preservative and cleaning effects are obtained by the preservative action and cleaning action of tin ions eluted in water.

Therefore, when the invention is applied in water contained in vase orflower pot, putrefaction of water contained in the vase or flower pot is delayed substantially, and rotting of stems of cut flowers submerged in water is suppressed, and it is effective to delay earlier seasoning of cut flowers due to impaired pumping of water by clogging of ducts of flowers with impurities by putrefaction. As a result, cut flowers can be maintained in fresh state for a longer period, and the life can be extended.

By applying the invention in water tank, water can be maintained in clean state for a long period.

### (Embodiment 4)

In manufacturing device of metal ion water or water treatment apparatus in embodiment 4, of the two dissimilar metals 1, 2, one metal of higher ionization tendency and/or lower electrode potential is aluminum (Al), and other metal of lower ionization tendency and/or higher electrode potential than aluminum (Al) is tin (Sn), copper (Cu) or silver (Ag), and by plating other metal on one metal, aluminum and tin, copper or silver are adhered to each other.

The manufacturing device of metal ion water or water treatment apparatus in embodiment 4 is thus composed, and when this manufacturing device of metal ion water or water treatment apparatus is merely submerged in water to be treated, aluminum ions are perpetually and efficiently eluted from aluminum (Al) as the metal of higher ionization tendency and/or lower electrode potential by corrosive action of oxidation-reduction reaction by local cell formation of aluminum (Al) as the metal of higher ionization tendency and/or lower electrode potential for moving electrons from the metal of lower electrode potential to the metal of higher potential, in order to prevent corrosion of tin (Sn), copper (Cu) or silver (Ag) as the metal of lower ionization tendency and/or higher electrode potential of the two dissimilar metals 1, 2, and therefore aggregating and settling effects are obtained by the aggregating and settling actions of aluminum ions eluted in water.

Therefore, when embodiment 4 and embodiment 1 are combined, for example, water bloom destroyed by copper ions can be aggregated by aluminum ions to settle in the bottom.

### (Embodiment 5)

In manufacturing device of metal ion water or water treatment apparatus in embodiment 5, of the two dissimilar metals 1, 2, one metal of higher ionization tendency and/or lower electrode potential is magnesium (Mg), and other metal of lower ionization tendency and/or higher electrode potential than magnesium (Mg) is tin (Sn), copper (Cu) or silver (Ag), and by plating other metal on one metal by cladding, magnesium and tin, copper or silver are adhered to each other.

The manufacturing device of metal ion water or water treatment apparatus in embodiment 5 is thus composed, and when this manufacturing device of metal ion water or water treatment apparatus is merely submerged in water to be treated, magnesium ions are perpetually and efficiently eluted from magnesium (Mg) as the metal 1 of higher ionization tendency and/or lower electrode potential by corrosive action of oxidation-reduction reaction by local cell formation of magnesium (Mg) as the metal of higher ionization tendency and/or lower electrode potential for moving electrons from the metal of lower electrode potential to the metal of higher potential, in order to prevent corrosion of tin (Sn), copper (Cu) or silver (Ag) as the metal of lower ionization tendency and/or higher electrode potential of the two dissimilar metals 1, 2.

Therefore, when embodiment 5 is applied in tap water used for various purposes, magnesium ions are bonded with chlorine of hypochlorous acid to transform into magnesium chloride (component of bittern), adverse effects of chlorine can be eliminated.

When applied in tap water, well water, natural water, or any kind of water, water of low oxidation-reduction potential (alkaline reducing ion water) can be manufactured at low cost. In particular, as the metal 2 of lower ionization tendency and/or higher electrode potential, by using a material containing carbon, graphite or other carbon compound of high ionization tendency and potential difference, (minus potential) alkaline reducing ion water of extremely low oxidation-reduction potential not obtained by electrolysis can be manufactured efficiently.

In the structure of embodiment 5, moreover, since hydrogen is generated from magnesium, hydrogen water having hydrogen dissolved in water can be manufactured easily and low cost. At this time, by incorporating in gas dissolving machine, alkaline reducing ion water of high hydrogen dissolving rate and containing eluted magnesium ions can be manufactured.

Further, in the structure of embodiment 5, since hydrogen is generated from magnesium (Mg), it can be utilized as hydrogen generating apparatus. In this case, it is particularly useful where power source is not available.

Innumerable fine bubbles of hydrogen are generated from magnesium, and dust and foreign particles contained in water can be lifted to the water surface together with bubbles, and they can be removed easily.

### (Embodiment 6)

In manufacturing device of metal ion water or water treatment apparatus in embodiment 6, of the two dissimilar metals 1, 2, one metal of higher ionization tendency and/or lower electrode potential is iron (Fe), and other metal of lower ionization tendency and/or higher electrode potential than iron (Fe) is tin (Sn), and by plating other metal on one metal, iron and tin are adhered to each other.

The manufacturing device of metal ion water or water treatment apparatus in embodiment 6 is thus composed, and when this manufacturing device of metal ion water or water treatment apparatus is merely submerged in water to be treated, iron ions are perpetually and efficiently eluted from iron (Fe) as the metal 1 of higher ionization tendency and/or lower electrode potential by corrosive action of oxidation-reduction reaction by local cell formation of iron (Fe) as the metal of higher ionization tendency and/or lower electrode potential for moving electrons from the metal of lower electrode potential to the metal of higher potential, in order to prevent corrosion of tin (Sn) as the metal of lower ionization tendency and/or higher electrode potential of the two dissimilar metals 1, 2.

Therefore, when embodiment 6 is applied in river, lake water or seawater, aquatic animals and plants are activated, and iron ions are bonded with phosphorus in water, and consequently, iron phosphate is formed so that adverse effects of phosphorus contained in water can be eliminated.

### (Embodiment 7)

In manufacturing device of metal ion water or water treatment apparatus in embodiment 7, of the two dissimilar metals 1, 2, one metal of higher ionization tendency and/or lower electrode potential is zinc (Zn), and other metal of lower ionization tendency and/or higher electrode potential than zinc (Zn) is iron (Fe), and by plating zinc (Zn) on iron (Fe), iron and zinc are adhered to each other.

The manufacturing device of metal ion water or water treatment apparatus in embodiment 7 is thus composed, and when this manufacturing device of metal ion water or water treatment apparatus is merely submerged in water to be treated, zinc ions are perpetually and efficiently eluted from zinc (Zn) as the metal 1 of higher ionization tendency and/or lower electrode potential by corrosive action of oxidation-reduction reaction by local cell formation of zinc (Zn) as the metal of higher ionization tendency and/or lower electrode potential for moving electrons from the metal of lower electrode potential to the metal of higher potential, in order to prevent corrosion of iron (Fe) as the metal of lower ionization tendency and/or higher electrode potential of the two dissimilar metals 1, 2.

Therefore, when embodiment 7 is applied in drinking water, zinc of which uptake tends to be in shortage recently can be taken easily.

When embodiment 7 is applied in water intake and discharge piping in cooling tower or cooling system of plastic forming machine, fur, calcium and other foreign components in piping can be removed at low cost.

### (Embodiment 8)

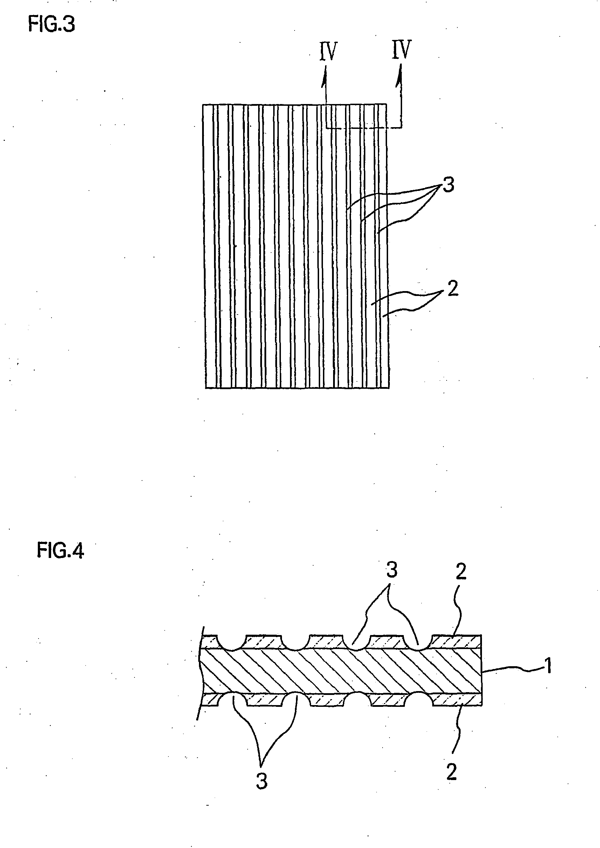

The manufacturing device of metal ion water or water treatment apparatus in embodiment 8 is shown in FIG. 3 (plan view) and FIG. 4 (magnified sectional view along line IV-IV in FIG. 3), in which of the two dissimilar metals 1, 2 mutually different in ionization tendency (potential), by plating other metal 2 on the entire face and back surfaces of one metal 1 of thin plate, the two metals 1, 2 are adhered to each other, and by removing multiple positions of the plated metal 2 by scribing or grooving to expose one metal 1, multiple contact boundary portions of two dissimilar metals 1, 2 are formed along the removed portions 3, which is different from the foregoing embodiments 1 to 7.

The manufacturing device of metal ion water or water treatment apparatus in embodiment 8 is thus composed, and the elution amount of metal ions is increased. That is, electrons move most actively in the boundary portions of the dissimilar metals 1, 2, and since the elution amount of metal ions is increased in an area of violent corrosive action of oxidation-reduction reaction by local cell formation, the elution amount of metal ions per unit area can be increased.

### (Embodiment 9)

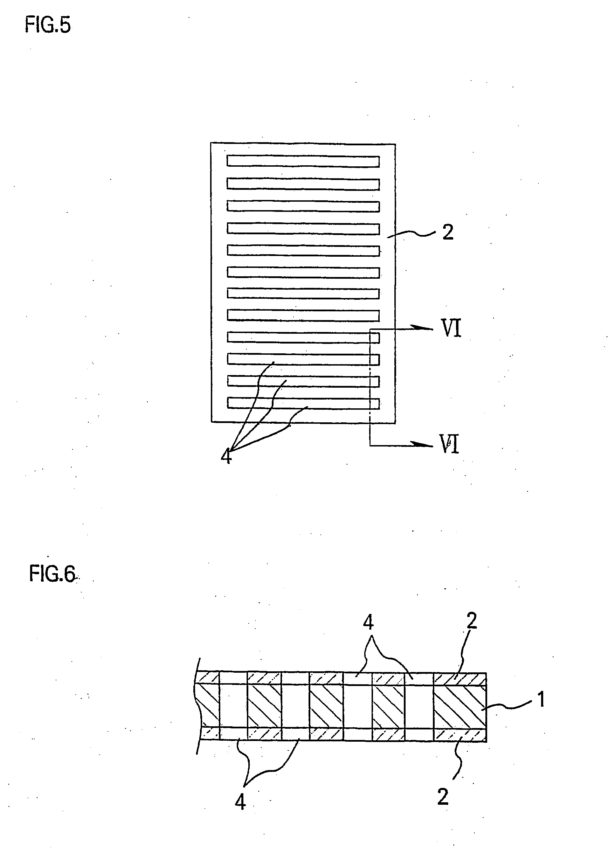

The manufacturing device of metal ion water or water treatment apparatus in embodiment 9 is shown in FIG. 5 (plan view) and FIG. 6 (magnified sectional view along line VI-VI in FIG. 5), in which of the two dissimilar metals 1, 2 mutually different in ionization tendency (potential), by plating other metal 2 on the entire face and back surfaces of one metal 1 of thin plate, the two metals 1, 2 are adhered to each other, and by cutting or blanking multiple holes 4 penetrating through two dissimilar metals 1, 2, multiple contact boundary portions of two dissimilar metals 1, 2 are formed at the inner side of opening edges of multiple holes 4, which is different from the foregoing embodiments 1 to 8.

The manufacturing device of metal ion water or water treatment apparatus in embodiment 9 is thus composed, and the elution amount of metal ions is increased. That is, since the elution amount of metal ions is the largest in the boundary portions of the dissimilar metals 1, 2, by forming multiple holes 4 as the elution portions of metal ions at the inner side, the elution amount of metal ions per unit area can be increased.

If one side contacts with the bottom in water, openings of holes 4 are always open, and elution efficiency of metal ions is not lowered, and maximum effects are obtained only by putting into water.

### (Embodiment 10)

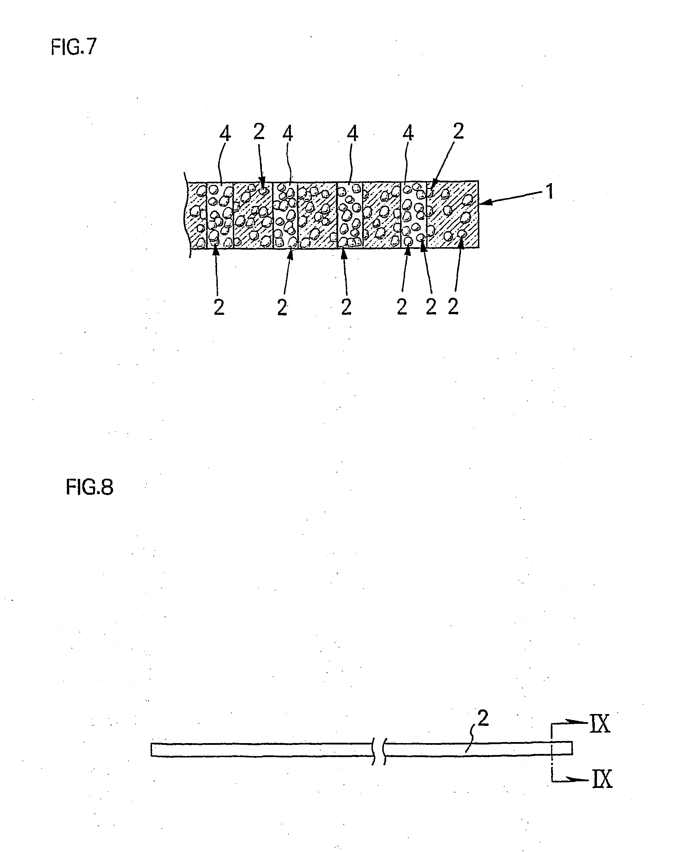

The manufacturing device of metal ion water or water treatment apparatus in embodiment 10 is shown in FIG. 7 (magnified sectional view along line VI-VI in FIG. 5), in which the metal 2 of lower ionization tendency and/or higher electrode potential of the two dissimilar metals 1, 2 is composed of powder, particles, wires or fibers of carbon, graphite or other carbon compound, and by being cast massively in coexisting state in the metal 1 of higher ionization tendency and/or lower electrode potential, the two dissimilar metals 1, 2 are adhered to each other, and by cutting or blanking multiple holes 4 penetrating through two dissimilar metals 1, 2, multiple contact boundary portions of two dissimilar metals 1, 2 are formed at the inner side of opening edges of multiple holes 4, which is different from the foregoing embodiments 1 to 9.

The manufacturing device of metal ion water or water treatment apparatus in embodiment 10 is thus composed, and same effects as in embodiment 9 are obtained.

Moreover, since the metal 2 of lower ionization tendency and/or higher electrode potential is composed of powder, particles, wires or fibers of carbon, graphite or other carbon compound, it can be cast massively in coexisting state in the metal 1 of higher ionization tendency and/or lower electrode potential, and by cutting or blanking multiple holes 4 penetrating through two dissimilar metals 1, 2, multiple contact boundary portions of two dissimilar metals are formed at the inner side of opening edges of multiple holes 4 so that the elution amount of metal ions per unit area can be further increased.

### (Embodiment 11)

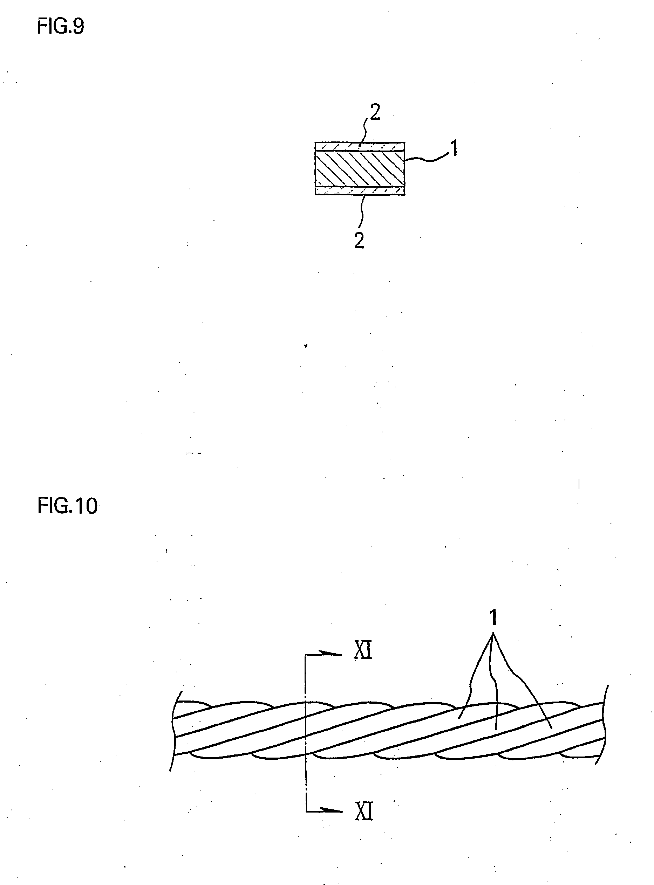

The manufacturing device of metal ion water or water treatment apparatus in embodiment 11 is shown in FIG. 8 (plan view) and FIG. 9 (magnified sectional view along line XI-XI in FIG. 8), in which by plating other metal 2 on the entire face and back surfaces of one metal 1 of thin plate of the two dissimilar metals 1, 2 mutually different in ionization tendency (potential), the two metals 1, 2 are adhered to each other, and by forming like wires by cutting in a orthogonal direction to the contact surface of the two dissimilar metals 1, 2, contact boundary portions of two dissimilar metals 1, 2 are formed at both cut sections along the longitudinal direction, which is different from the foregoing embodiments 1 to 10.

The manufacturing device of metal ion water or water treatment apparatus in embodiment 11 is thus composed, and the elution amount of metal ions is increased. That is, since the elution amount of metal ions is the largest in the boundary portions of the dissimilar metals 1, 2, the elution amount of metal ions per unit area can be increased.

By forming like wires, for example, flowers requiring water treatment can be bundled by wires to form a bouquet. Or by winding around an arbitrary object in water to be treated, it can be fixed stable in desired place in water.

### (Embodiment 12)

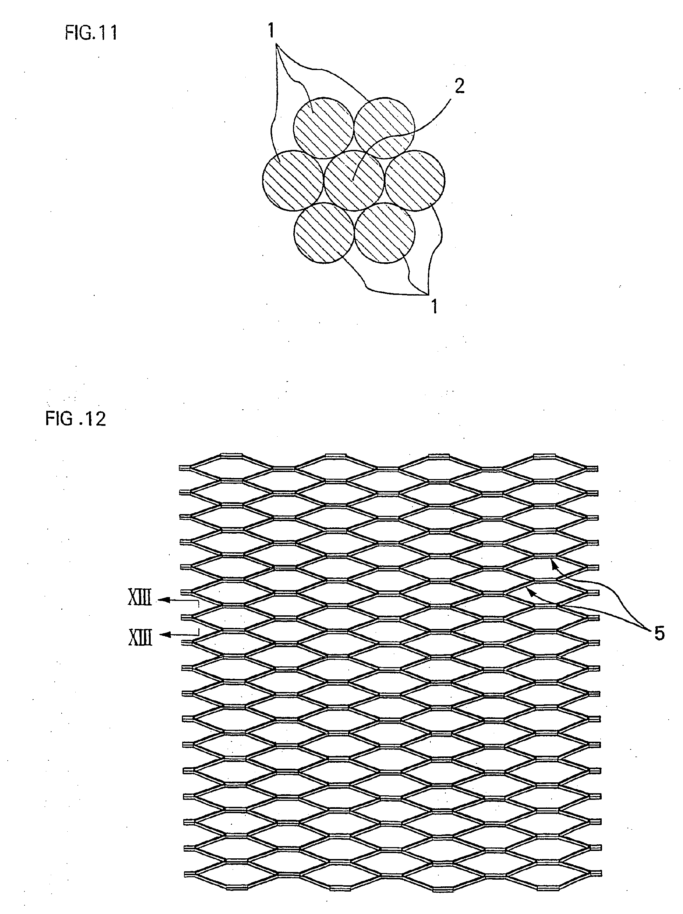

The manufacturing device of metal ion water or water treatment apparatus in embodiment 12 is shown in FIG. 10 (plan view) and FIG. 11 (magnified sectional view along line XI-XI in FIG. 10), in which two dissimilar metals 1, 2 are formed like wires, and two linear dissimilar metals 1, 2 are mutually sewn to contact with each other, which is different from the foregoing embodiments 1 to 11.

In embodiment 12, the metal 2 of lower ionization tendency and/or higher electrode potential is wound by plural wires of the linear metal 1 of higher ionization tendency and/or lower electrode potential on the outer circumference.

The manufacturing device of metal ion water or water treatment apparatus in embodiment 12 is thus composed, and the manufacturing cost is lowered, and since it is formed like wires, they can be used either alone or in combined form by knitting or sewing into rope or the like, and the applications are expanded.

The number and combination of two dissimilar metals 1, 2 are free, and thickness of wires and combination of large and small size are also free.

### (Embodiment 13)

The manufacturing device of metal ion water or water treatment apparatus in embodiment 13 is not shown in the drawing. Two dissimilar metals 1, 2 are formed like wires, and two linear dissimilar metals 1, 2 are mutually knitted to contact with each other, which is different from the foregoing embodiments 1 to 12.

The manufacturing device of metal ion water or water treatment apparatus in embodiment 13 is thus composed, and since it can be formed in a wide area flatly, the elution amount and range of metal ions can be extended, and in particular by installing in the midst of flow, it contacts with all passing water, and metal ions can be eluted efficiently.

### (Embodiment 14)

The manufacturing device of metal ion water or water treatment apparatus in embodiment 14 is not shown in the drawing Two dissimilar metals 1, 2 are formed like wires, and by winding the metal 1 of higher ionization tendency and/or lower electrode potential on the outer circumference of the metal 2 of lower ionization tendency and/or higher electrode potential of the two linear dissimilar metals, they are mutually adhered, and since the manufacture is easy, the manufacturing cost is lowered, and the application can be expanded.

### (Embodiment 15)

The manufacturing device of metal ion water or water treatment apparatus in embodiment 15 is not shown in the drawing. Since at least either one of the two dissimilar metals 1, 2 formed like wires same as in the embodiments 12, 13, and 14 is plated on the outer surface of the core member of other material, the core member can be composed of inexpensive iron, other metal, or resin other than metal so that the material cost is saved, and the strength and flexibility of wire material can be set freely.

### (Embodiment 16)

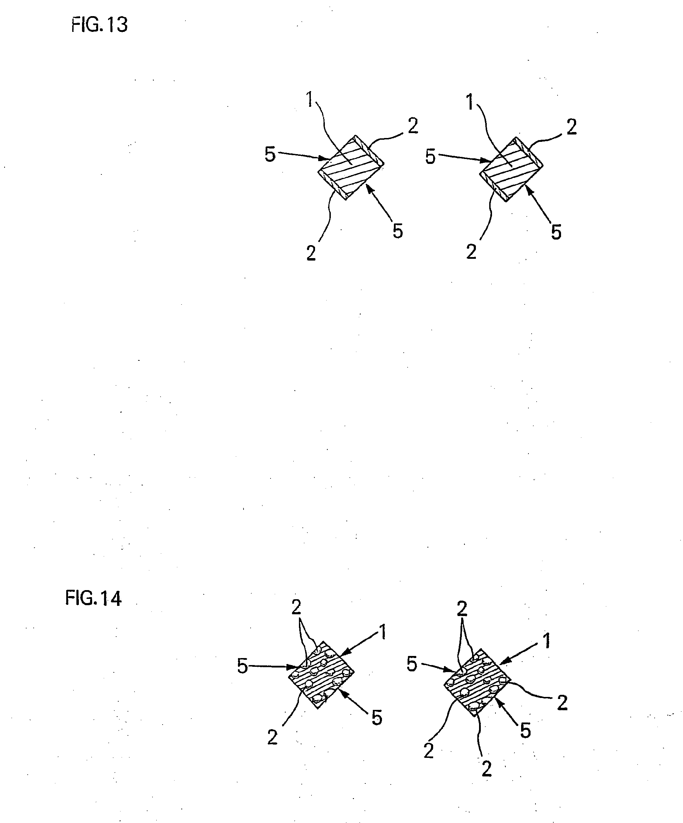

The manufacturing device of metal ion water or water treatment apparatus in embodiment 16 is shown in FIG. 12 (plan view) and FIG. 13 (magnified sectional view along line XIII-XIII in FIG. 12), in which by plating other metal 2 on the entire face and back surfaces of one metal 1 of thin plate of the two dissimilar metals 1, 2 mutually different in ionization tendency (potential), the two metals 1, 2 are adhered to each other, and by cutting in zigzag sections and expanding to form in rhombic mesh form, multiple contact boundary portions of two dissimilar metals 1, 2 are formed at expanded cut sections 5, which is different from the foregoing embodiments 1 to 15.

The manufacturing device of metal ion water or water treatment apparatus in embodiment 16 is thus composed, and the elution amount of metal ions is increased. That is, since the elution amount of metal ions is the largest in the boundary portions of dissimilar metals 1, 2, multiple cut sections 5 as elution portions of metal ions are formed, and the elution amount of metal ions per unit area can be increased.

Without waste of material, therefore, the elution amount of metal ions per unit area can be increased.

Besides, by expanding cut sections, metals become brittle and are more likely to corrode, and the elution amount of metal ions is further increased.

Since multiple cut sections 5 are formed, water permeability is assured, and it is particularly effective in flowing portions.

### (Embodiment 17)

The manufacturing device of metal ion water or water treatment apparatus in embodiment 17 is shown in FIG. 14 (magnified sectional view along line XIII-XII in FIG. 12), in which the metal 2 of lower ionization tendency and/or higher electrode potential of the two dissimilar metals 1, 2 is composed of powder, particles, wires or fibers of carbon, graphite or other carbon compound, and by being cast massively in coexisting state in the metal 1 of higher ionization tendency and/or lower electrode potential, the two dissimilar metals 1, 2 are adhered to each other, and by cutting plates of two dissimilar metals 1, 2 in zigzag form and expanding to rhombic mesh form, multiple contact boundary portions of two dissimilar metals 1, 2 are formed at cut sections 5, which is different from the foregoing embodiments 1 to 16.

The manufacturing device of metal ion water or water treatment apparatus in embodiment 17 is thus composed, and the same effects as in embodiment 16 are obtained.

Since the metal 2 of lower ionization tendency and/or higher electrode potential is composed of powder, particles, wires or fibers of carbon, graphite or other carbon compound, it can be cast massively in coexisting state in the metal 1 of higher ionization tendency and/or lower electrode potential, and by cutting plates of two dissimilar metals 1, 2 are cut in zigzag form and expanded to rhombic mesh form, multiple contact boundary portions of two dissimilar metals 1, 2 are formed at cut sections 5, so that the elution amount of metal ions per unit area can be further increased.

### (Embodiment 18)

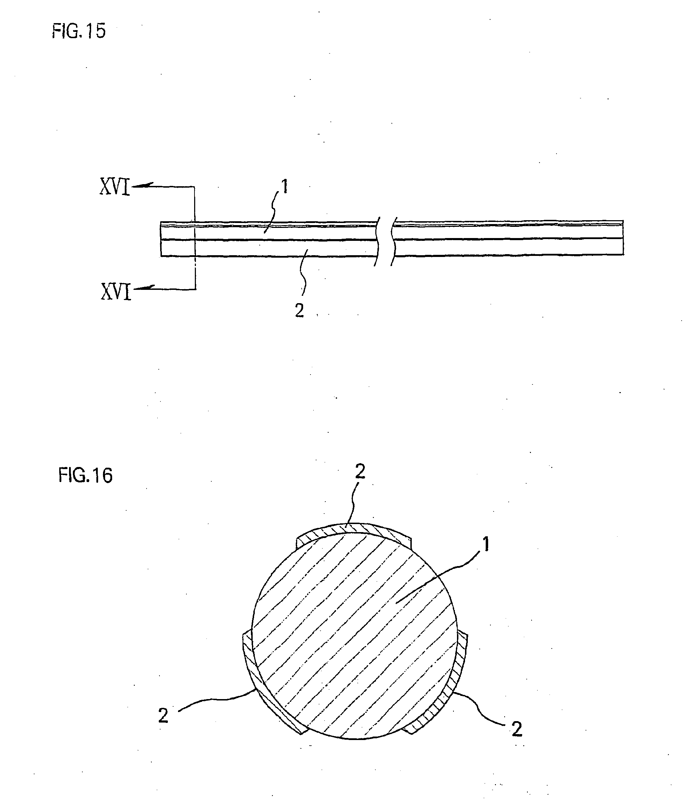

The manufacturing device of metal ion water or water treatment apparatus in embodiment 18 is shown in FIG. 15 (magnified plan view) and FIG. 16 (magnified sectional view along line XVI-XVI in FIG. 15), in which one metal of two dissimilar metals 1, 2 mutually different in ionization tendency (potential) is formed in very fine thread, and since other metal 2 is plated on part of the surface of the threadlike metal 1, multiple contact boundary portions of two dissimilar metals 1, 2 are formed on the surface of the fine thread-like metal 1, which is different from the foregoing embodiments 1 to 17.

In embodiment 18, other metal 2 is plated on the surface of thread-like metal 1 in plural lines along the longitudinal direction at equal intervals in the circumferential direction.

The manufacturing device of metal ion water or water treatment apparatus in embodiment 18 is thus composed, and it can be knitted into rope, woven into cloth, formed into knit, or formed into nonwoven cloth, and the application can be expanded widely.

For example, when the thread-like metal 1 is copper, and the plating metal 2 is silver, and also a nonwoven cloth is formed and placed in the blood filtering path, the blood can be sterilized by copper ions eluted from copper. It may be also assembled in inner wall of catheter pipe. By knitting into fishing net, sticking of jellyfish to fishing net can be prevented, or the jellyfish can be destroyed.

Embodiments of the invention are described herein, but the invention is not limited to these embodiments alone, but may be changed or modified within a scope not departing from the true spirit of the invention. In the embodiments, for example, the metal 1 of higher ionization tendency and/or lower electrode potential includes aluminum (Al), copper (Cu), magnesium (Mg), tin (Sn), silver (Ag) or iron (Fe), but any other metals may be used such as gold, platinum or their alloys. The metal 2 of lower ionization tendency and/or higher electrode potential is not limited to the metals shown in the embodiments, but may include other metals such as stainless steel.

in embodiment 1, of the two dissimilar metals 1, 2 mutually different in ionization tendency (potential), the metal 2 of lower ionization tendency and/or higher electrode potential is plated on one side of plate of the metal 1 of higher ionization tendency and/or lower electrode potential, but it is not required to plate on the entire surface of one side, but may be plated in part.

In the embodiments, both metals are adhered to each other by plating other metal on one metal, but by adhering other metal to either one metal of the two dissimilar metals 1, 2 by cladding method, adhered state may be obtained easily and securely. The cladding method includes rolling method, extrusion method, drawing method, and diffusion method.

In the embodiments, either one metal of the two dissimilar metals 1, 2 is formed like a plate, and other metal is plated on its one side, but the shape is free and arbitrary.

For example, one of the two dissimilar metals 1, 2 is divided into multiple portions and mutually adhered to the other metal, or the two dissimilar metals 1, 2 are mixed in multiple divisions in a form of powder, particles, wires or fibers, and consequently the two metals 1, 2 may be bonded and integrated mutually without being dissolved completely so that multiple contact boundary portions of the two dissimilar metals 1 , 2 are formed on the entire surface, and the elution amount of metal ions per unit area can be increased. Further, the two dissimilar metals 1, 2 are mixed in multiple divided portions in powder, particles, wires or fibers, and the two dissimilar metals 1, 2 are partially bonded and integrated without being dissolved completely while multiple continuous pores are formed in the portions not bonded, and therefore multiple contact boundary portions of the two dissimilar metals 1, 2 are formed on the surface and in the entire inside so that the elution amount of metal ions per unit area can be further increased. Such structure can be manufactured easily by a manufacturing method of sinter metal by compressing and forming powder of the two dissimilar metals 1, 2 and sintering at temperature lower than melting point.

When at least the metal 2 of the two dissimilar metals 1 , 2 is mixed in multiple divided portions in powder, particles, wires or fibers, the metal 2 of lower ionization tendency and/or higher electrode potential may be an inexpensive mineral containing copper, iron or other metal (including silicon or carbon).

In the embodiments, the metal of higher ionization tendency and/or lower electrode potential of the two dissimilar metals 1, 2 is the base material and other metal of lower ionization tendency and/or higher electrode potential is the plating metal, but the relation may be inverted.

In embodiments 8 to 11 and 16 , other metal is plated on both sides of one metal, but it may be plated on one side only.

In embodiments 9 and 10, through-holes 4 are formed like slits, but the hole shape is arbitrary, and multiple round holes may be formed.

In embodiment 18, other metal 2 is plated on the surface of the thread-like metal 1 in plural lines at equal intervals in circumferential direction, but the number of lines is arbitrary, and the metal may be plated spirally, or in circles at specified intervals in the longitudinal direction. After plating other metal 2 on the entire surface of thread-like metal 1, plating may be partly stripped by scribing, cutting or other method.

In the embodiments, water treatment of fresh water is mainly explained, but the invention can be applied in treatment by eluting metal ions in seawater, blood, or any other liquid aside from fresh water.

By using wood acetic acid or bamboo acetic acid, wood acetic acid or bamboo acetic acid of high concentration of metal ions can be manufactured.

Using plate material of iron (Fe) as the base, the metal of lower ionization tendency and/or higher electrode potential (for example, copper (Cu)) may be plated on its entire outer surface, and the metal of higher ionization tendency and/or lower electrode potential (for example, tin (Sn)) may be plated on one side or arbitrary portion. Thus, the material cost can be lowered.

In the embodiments, by preliminarily drawing the two dissimilar metals of higher ionization tendency and/or lower electrode potential and making the metal brittle to be corroded easily, the elution amount of metal ions can be increased.

The manufacturing device of metal ion water or water treatment apparatus of the embodiments can function as hydrogen generating device or hydrogen generating apparatus by using magnesium as the metal 1 of higher ionization tendency and/or lower electrode potential.

## Claims

1. A manufacturing method of metal ion water **characterized by** submerging two dissimilar metals mutually different in ionization tendency (potential) in water to be treated in mutually contacting state, wherein metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals.

2. A water treatment method **characterized by** submerging two dissimilar metals mutually different in ionization tendency (potential) in water to be treated in mutually contacting state, wherein metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals.

3. The manufacturing method of metal ion water of claim 1 and the water treatment method of claim 2, wherein the dissolved oxygen in the water to be treated is increased.

4. A manufacturing device of metal ion water, being a manufacturing device of metal ion water used in submerged state in water to be treated, comprising two dissimilar metals mutually different in ionization tendency (potential) in mutually contacting state, wherein metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals.

5. A water treatment apparatus is a water treatment apparatus used in submerged state in water to be treated, comprising two dissimilar metals mutually different in ionization tendency (potential) in mutually contacting state, wherein metal ions are perpetually eluted from the metal of higher ionization tendency and/or lower electrode potential by corrosive action of oxidation-reduction reaction by local cell formation of the metal of higher ionization tendency and/or lower electrode potential for moving electrons from the metal of lower electrode potential to the metal of higher potential, in order to prevent corrosion of the metal of lower ionization tendency and/or higher electrode potential of the two dissimilar metals.

6. The manufacturing method of metal ion water, the water treatment method, the manufacturing device of metal ion water or the water treatment apparatus of any one of claims 1 to 5, wherein other metal is plated on either one metal of the two dissimilar metals, and both contact with each other.

7. The manufacturing method of metal ion water, the water treatment method, the manufacturing device of metal ion water or the water treatment apparatus of claim 6, wherein the metal of lower ionization tendency and/or higher electrode potential is plated on the metal of higher ionization tendency and/or lower electrode potential, and both metals are adhered tightly to each other.

8. The manufacturing method of metal ion water, the water treatment method, the manufacturing device of metal ion water or the water treatment apparatus of any one of claims 1 to 5, wherein other metal is adhered to either one metal of the two dissimilar metals by cladding method.

9. The manufacturing method of metal ion water, the water treatment method, the manufacturing device of metal ion water or the water treatment apparatus of any one of claims 6 to 8, wherein by exposing other metal by removing multiple cutting positions by scribing or grooving either one metal adhered by plating or cladding method, many contact boundary portions of two dissimilar metals are formed.

10. The manufacturing method of metal ion water, the water treatment method, the manufacturing device of metal ion water or the water treatment apparatus of any one of claims 4 to 8, wherein by cutting or blanking multiple holes penetrating through two dissimilar metals, multiple contact boundary portions of two dissimilar metals are formed in the inner side of the multiple holes, and multiple contact boundary portions of two dissimilar metals are formed.

11. The manufacturing method of metal ion water, the water treatment method, the manufacturing device of metal ion water or the water treatment apparatus of any one of claims 6 to 8,
wherein by processing nearly in rhombic mesh form by cutting zigzag sections and expanding in plate material composed of two dissimilar metals.

12. The manufacturing method of metal ion water, the water treatment method, the manufacturing device of metal ion water or the water treatment apparatus of any one of claims 6 to 8, wherein by forming like metal wires by cutting in a direction nearly orthogonal to the contact surfaces of two dissimilar metals, contact boundary portions of two dissimilar metals are formed at cut sections at both sides in a longitudinal direction.

13. The manufacturing method of metal ion water, the water treatment method, the manufacturing device of metal ion water or the water treatment apparatus of any one of claims 6 to 8, wherein either one of the two dissimilar metals is formed like a string, and other metal is plated in part of the surface of the string metal.

14. The manufacturing method of metal ion water, the water treatment method, the manufacturing device of metal ion water or the water treatment apparatus of any one of claims 1 to 5, wherein the two dissimilar metals are formed linearly, and the both linear dissimilar metals are woven or knitted in mutually adhering state.

15. The manufacturing method of metal ion water, the water treatment method, the manufacturing device of metal ion water or the water treatment apparatus of any one of claims 1 to 5, wherein the two dissimilar metals are formed linearly, and either one metal of the two linear dissimilar metals is wound on the other metal to be adhered to each other.

16. The manufacturing method of metal ion water , the water treatment method, the manufacturing device of metal ion water or the water treatment apparatus of claim 14 or 15, wherein either one metal of the two dissimilar metals formed linearly is plated on the outer side of a core member made of other material.

17. The manufacturing method of metal ion water, the water treatment method, the manufacturing device of metal ion water or the water treatment apparatus of any one of claims 1 to 5, wherein either one metal of the two dissimilar metals having lower ionization tendency and/or higher electrode potential is composed of powder, particles, wire or fiber containing carbon such as carbon or graphite, and it is massively cast into other metal of higher ionization tendency and/or lower electrode potential in coexisting state, and the two dissimilar metals are adhered to each other, and
by cutting or blanking multiple holes penetrating through two dissimilar metals, multiple contact boundary portions of two dissimilar metals are formed at the inner side of multiple holes.

18. The manufacturing method of metal ion water, the water treatment method, the manufacturing device of metal ion water or the water treatment apparatus of any one of claims 1 to 5, wherein either one metal of the two dissimilar metals having lower ionization tendency and/or higher electrode potential is composed of powder, particles, wire or fiber containing carbon such as carbon or graphite, and it is massively cast into other metal of higher ionization tendency and/or lower electrode potential in coexisting state, and the two dissimilar metals are adhered to each other, and
by processing nearly in rhombic mesh form by cutting zigzag sections and expanding in plate material composed of two dissimilar metals, multiple contact boundary portions of two dissimilar metals are formed in the cut sections.

19. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of copper.

20. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of silver.

21. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of tin.

22. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of aluminum.

23. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of magnesium.

24. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of iron.

25. The manufacturing method of metal ion water, the water treatment method, the manufacturing device of metal ion water or the water treatment apparatus of any one of claims 1 to 18, wherein either one metal of the two dissimilar metals having higher ionization tendency and/or lower electrode potential is formed of zinc.
